# EUROPEAN PATENT SPECIFICATION

(11) **EP 3 789 761 B1**
(45) Date of publication and mention of the grant of the patent: **20.03.2024**
(21) Application number: 19382761.5
(22) Date of filing: 05.09.2019
(51) Int. Cl.: G01N 31/22, C07F 15/02, C09K 9/02, G01N 21/78

(54) **COLORIMETRIC DETECTOR**
KOLORIMETRISCHER DETEKTOR
DÉTECTEUR COLORIMÉTRIQUE

(43) Date of publication of application: 10.03.2021
(73) Proprietor: Fundación Imdea Nanociencia, 28049 Madrid (ES)
(72) Inventor: SÁNCHEZ COSTA, José, E-28049 Madrid (ES); RESINES URIÉN, Esther, E-28049 Madrid (ES); GAMONAL RUIZ-CRESPO, Arturo, E-28049 Madrid (ES); PIÑEIRO, Lucia, E-28049 Madrid (ES)
(74) Representative: ABG Intellectual Property Law, S.L.

(56) References cited:
- WO-A1-03/019695
- WO-A1-2007/065996
- ONGGO DJULIA ET AL: "Bistable thermo-chromic and magnetic spin crossover microcrystals embedded innata de cocobacterial cellulose biofilm", CELLULOSE, SPRINGER NETHERLANDS, NETHERLANDS, vol. 24, no. 5, 7 March 2017 (2017-03-07), pages 2205-2213, XP036205960, ISSN: 0969-0239, DOI: 10.1007/S10570-017-1248-3 [retrieved on 2017-03-07]
- BRÄUNLICH IRENE ET AL: "Tuning the spin-crossover temperature of polynuclear iron(II)-triazole complexes in solution by water and preparation of thermochromic fibers", JOURNAL OF MATERIALS SCIENCE, KLUWER ACADEMIC PUBLISHERS, DORDRECHT, vol. 50, no. 6, 13 January 2015 (2015-01-13), pages 2355-2364, XP035437303, ISSN: 0022-2461, DOI: 10.1007/S10853-014-8704-3 [retrieved on 2015-01-13]

## Description

### FIELD OF THE INVENTION

This invention relates to the detection of formaldehyde, more preferably to the detection of formaldehyde concentrations in the air. The type of detection involved is a colorimetric reaction wherein the color intensity is proportional to the amount of formaldehyde. The colorimetric response can be read with standard spectroscopic techniques, such as NMR or reflectance spectrophotometers, or visually by the human naked-eye using color comparison standards.

### BACKGROUND

The Sick Building Syndrome (SBS) is defined as a medical condition in which the occupants of a building suffer acute health- or comfort-related effects, such as headache, mucous irritation (eyes, nose and throat), dry or itching skin, fatigue, difficulty in concentration, sensitivity to odors, cold, flu-like symptoms, dizziness and nausea for no apparent reason. Said symptoms seem to be linked directly to the time spent in the building. In 1984 the WHO reported that up to 30% of new and remodeled buildings worldwide may have poor indoor air quality. Although the cause of the symptoms is not known, most of the patients report relief soon after leaving the building. Some of the plausible factors that might be primarily responsible for SBS are chemical contaminants from outdoor sources (pollutants from motor vehicle exhaust, plumbing vents and building exhausts from bathrooms and kitchens). From indoor sources, the most common contaminant of indoor air includes volatile organic compounds (VOCs) with the main sources being adhesives, paint, upholstery, carpeting, pesticides, cleaning agents and manufactured wood products. Formaldehyde, a widely used compound in household materials and industrial processes, has been classified as a human carcinogen by the World Health Organization (WHO) *(https:*//*monographs.iarc.fr*/*wp-content*/*uploads*/*2018*/*09*/*ClassificationsAlphaOrder.pdf)* and identified as a major cause of sick building syndrome (SBS) *(*S.M. Joshi, Indian J. Occup. Environ. Med. 2008, 12, 61-64).

Currently available means for detecting formaldehyde include, among others, electrochemical gas sensors where the target gas undergoes electrochemical reactions with a given electrolyte. The resulting current can be measured and, most important, is related to the concentration of the gas in the sample. For example, NE4-Electrochemical Formaldehyde (HCHO) Gas Sensor (commercialized by Nemoto Sensor Engineering Company Ltd.), or Formaldehyde Detector XP-308B (commercialized by New Cosmos) are portable and user friendly devices, however expensive (around 150 €).

Years ago, the mixture comprising the reagent and additives was exposed to the target gas and illuminated with light emitting diodes (LEDs). The light intensity after passage through the sample and operational amplifiers was measured with photodiodes, to yield a directly proportional output voltage, i.e. a transmittance measurement that can be translated in terms of absorbance; hence, the concentration of formaldehyde was estimated according to the Beer-Lambert Law.

More recently, an optic spectrometer allowed to record the degree of color change by measuring the intensity of the reflecting light. In order to perform quantitative estimations, the reflectance spectrum obtained before and after exposure to formaldehyde gas has to be converted into RGB (red, green and blue) values, the resulting color-change profile helps to determine the concentration of formaldehyde. The optical modification is usually triggered by a reaction between an amine group and formaldehyde, particularly a nucleophilic addition, which yields the corresponding imine and water. The changes in basicity due to this transformation can be related to the amount of formaldehyde (Suslick, K.S. et al., J. Am. Chem. Soc., 2010, 132, 4046-4047)*.* Moreover, in some cases, an acid can be added and its protonation might increase the pH of the media (Li., J. et al., Sensors and Actuators 8, 2014, 196, 10). In these circumstances, the detection of formaldehyde in the sample is done by pH indicators.

The well-known Metal Organic Frameworks (MOFs), i.e. organic linkers coordinated to metal sites building up three-dimensional structures, are materials currently studied for constructing chemical sensing devices. MOFs based on octahedral complexes featuring transition metal ions with 3d⁴-3d⁷ electronic configurations are particularly alluring. These materials can exhibit reversible switching between the low spin (LS) and high spin (HS) states in response to several stimulus, such as a variation in temperature or pressure, light irradiation, a magnetic field or the uptake of guest molecules. The phenomenon is known as the spin crossover (SCO) phenomenon, and the electronic changes are intrinsically related with structural modifications that deeply affect the physical properties displayed by the SCO material.

Fe(pyrazine)[Pt(CN)₄] is a paramount example of SCO MOF which undergoes HS→LS spin transition when absorbing CS₂. On the contrary, the uptake of benzene turns the system back to the HS state. Even more remarkable is that the CS₂ derivative, displaying the LS spin state, is red. However, when benzene molecules fill the pores instead, the material becomes yellow as it displays the HS state *(*Ohba, M. et al., Angew. Chem. Int. Ed., 2009, 48, 4767-4771*).*

Another example is the compound of discrete formula [Fe(L-NH₂)₂]·H₂O (HL-NH₂ = 2-pyridinecarbaldehyde(4'-aminobenzoyl)hydrazone), which displays an amino functional group capable of reacting with formaldehyde (Chen, X.-Q. et al., Inorg. Chem. 2019, 58, 2, 999-1002). Notably, this compound changed its color too upon exposure to HCl and HAc vapors, and recovered after exposure to amine.

Although current commercial colorimetric methods, based on color changes arising from the specific chemical reaction between formaldehyde and a certain reagent, are an excellent alternative and the optical modification can be related to the concentration of formaldehyde, the reagents are generally used in a mixture with other ingredients such as stabilizers or buffers. On top of that, some of the examples known in the literature release dangerous compounds, such as sulfuric acid, or requires the use of heavy metals. In other cases the detection method requires signal and data processing. When the detection method is based in a reversible reaction or process, the results of the assay cannot be manipulated. Therefore, from all the above, it is clear that a simple, safer, non-reversible, more selective and low-cost alternative approach is needed.

The present invention relates to the novel chemistry and use of a SCO compound and its implementation in a portable, hand-held device that allows for a fast identification and/ or quantitative analysis of formaldehyde. It does not require the use of complicated apparatus, harmful chemicals, expensive reagents or materials, and no signal or data processing is required either. Additionally, the reaction involved is highly selective, non-reversible, and so is the change in color; hence the assay results cannot be manipulated and are completely reliable.

### BRIEF DESCRIPTION OF THE INVENTION

In a first aspect, the present invention is directed to the use of a coordination polymer, wherein the coordination polymer comprises repeating coordination complexes with an octahedral geometry, wherein said coordination complex comprises iron (II), at least one ligand comprising an amino moiety; wherein the coordination polymer further comprises counter-ions comprising an aromatic moiety; for the identification and/or quantification of formaldehyde.

The use of a coordination polymer in agreement with the present invention is defined in claim 1.

In a second aspect, the present invention is directed to a composite material, wherein said composite comprises a coordination polymer, wherein said coordination polymer comprises repeating coordination complexes with an octahedral geometry, wherein said coordination complex comprises iron (II), at least one ligand comprising an amino moiety, and wherein the coordination polymer further comprises counter-ions comprising an aromatic moiety; and a matrix; wherein the coordination polymer of the invention is embedded in and/or coating the matrix. The composite material of the present invention is defined in claim 6.

In a third aspect, the present invention is directed to the use of the composite material as defined above for the identification and/or quantification of formaldehyde, by a detectable spectroscopic response such as a colorimetric response that can be detected by the human naked-eye.

In a fourth aspect, the present invention is directed to a hand-held portable device comprising the composite as defined above and a suitable case. The hand-held portable device of the invention is defined in claim 10.

A fifth aspect of the invention is directed to the use of a hand-held portable device for the identification and/or quantification of formaldehyde by detectable spectroscopic response, such as a colorimetric response that can be detected by the human naked-eye.

In a sixth aspect, the present invention is directed to a method for the identification and/or quantification of formaldehyde, wherein the method comprises the following steps: i) contacting either the composite as defined in the second aspect or the hand-held device as defined in the fourth aspect with a gaseous, liquid or solid analyte to produce a non-reversible reaction which produces a detectable spectroscopic response ii) detecting the color displayed by the composite after being in contact with the sample of step (i); iii) comparing the color obtained with a concentration colored map and the intensity of said color.

Finally, a seventh aspect of the invention is directed to a process for preparing the composite of the third aspect, comprising the following steps: i) providing a matrix; preferably a polymeric matrix; ii) providing the coordination polymer as defined in the first aspect; iii) combining the matrix (i) and the coordination polymer (ii); preferably by mixing them or by coating the matrix with the coordination polymer.

### BRIEF DESCRIPTION OF THE DRAWINGS

The accompanying drawings, which are incorporated herein and form a part of the specification, illustrate embodiments of the present invention and, together with the description, further serve to explain the principles of the invention and to enable a person skilled in the pertinent art to make and use the invention.
FIG.1. Illustrates the scheme of reaction between compound 1 and formaldehyde to yield compound 2.
FIG.2. ¹H NMR spectra of compounds 1 and 2.
FIG.3. Infrared spectrum of compounds 1 and 2, OTs⁻ and formaldehyde, between 4000 and 400 cm⁻¹.
FIG.4. Illustrates the optical reflectivity vs. T of compounds 1 and 2.
FIG.5. ¹H NMR spectra of compounds 1, 3, 4 and 5.

Embodiments of the present invention will be described with reference to the accompanying drawings.

### DETAILED DESCRIPTION OF THE INVENTION

It should be understood that the scope of the present disclosure includes all the possible combinations of embodiments disclosed herein.

In a first aspect, the invention is directed to the use of a coordination polymer, wherein the coordination polymer comprises repeating coordination complexes with an octahedral geometry, wherein said coordination complex comprises iron (II), at least one ligand comprising an amino moiety, wherein the coordination polymer further comprises counter-ions comprising an aromatic moiety; for the identification and/or quantification of formaldehyde.

The term "coordination polymer" in the present invention is directed to an inorganic or organometallic polymeric structure comprising metal cation centers linked by ligands; it is understood that "coordination polymer" refers to a coordination compound with repeating coordination entities extending in 1, 2 or 3 dimensions.

In the present invention, iron (II) refers to a cationic iron in oxidation state +2.

The expression "at least one ligand comprising an amino moiety", in the present invention, refers to a ligand containing at least one basic nitrogen atom with a lone electron pair, further comprising three substituents, such as three hydrogen atoms; alternatively, it comprises two hydrogen atoms and one alkyl or aryl substituent or a side chain; alternatively, it comprises one hydrogen atom and two alkyl or aryl substituents or side chains; alternatively, it comprises up to three alkyl or aryl substituents or side chains. Non-limiting examples of ligands comprising an amino moiety are aniline, diethyl amine, 4-amino-1,2,4-triazole, or 3-amino-1,2,4-triazole.

In the present invention, the repeating coordination complexes with an octahedral geometry comprising an iron (II) is coordinated to at least one ligand comprising an amino moiety; preferably, the iron (II) is coordinated to at least two ligands each one comprising an amino moiety; even more preferably, the iron (II) is coordinated to at least three ligands each one comprising an amino moiety. In order to complete the coordination sphere of the iron (II) center of the present invention, 6 coordination atoms have to arrange in a suitable spatial geometry. Therefore, in non-limiting examples, either 6 terminal ligands such as monodentate ligands, or 3 bidentate ligands, or 2 tridentate ligands, or any suitable combination of the previous, such as 4 monodentate ligands and one bidentate ligand, coordinate to the iron (II) center, wherein at least one of said ligands comprises an amino moiety. In the present invention, the term "denticity" of a ligand is defined by the number of times a ligand binds to a metal center by non-contiguous donor sites. Bridging ligands, which connect at least two metal ions, can also be arranged around the metal center in the coordination sphere.

As disclosed in the first aspect, the coordination polymer comprises repeating coordination complexes, and further comprises counter-ions comprising an aromatic moiety. In the present invention, the expression "comprises counter-ions comprising an aromatic moiety", refers to the ion that neutralizes the electronic charge of another ionic species, said ion comprising an aromatic ring comprising between 5 and 12 atoms; wherein the atoms can be either carbon or heteroatoms such as O, N, S. Non-limiting examples of counter-ions comprising an aromatic moiety are para-toluenesulfonate, orto-toluenesulfonate, para-hydroxybenzoate, or meta-hydroxybenzoate. The coordination polymer of the present invention comprises as many counter-ions as necessary to neutralize the electric charge of the coordination complexes.

As used herein, the term "alkyl" refers to a linear or branched saturated hydrocarbon chain radical, or a saturated or partially saturated cyclic aliphatic group, consisting of carbon and hydrogen atoms, preferably comprising between 1 and 6 carbon atoms, and which is attached to the rest of the molecule by a single bond. The term "aryl" refers to an aromatic cyclic group having between 5 and 12 carbon atoms, which can also comprise other substituents, including for example and in a non-limiting sense, phenyl, naphthyl, o-tolyl, p-tosyl, etc. The term "side chain", describes any chemical group that is attached to a core part of a molecule, or backbone, and includes alkyl, alkenyl, alkynyl, aryl and heterocyclic groups containing substituents at one or more available positions by one or more suitable groups such as OR, =O, SR, SOR, SO₂R, NO₂, NHR, N(R)₂, =N-R, NHCOR, N(COR)₂, NHSO₂R, NRC(=NR)NRR, CN, halogen, COR, COOR, OCOR, OCONHR, OCON(R)₂, CONHR, CON(R)₂, wherein each of the R groups is independently selected from the group consisting of hydrogen, OH, NO₂, NH₂, SH, CN, halogen, COH, CO-alkyl, COOH, substituted or unsubstituted C₁-C₁₂ alkyl, substituted or unsubstituted C₂-C₁₂ alkenyl, substituted or unsubstituted C₂-C₁₂ alkynyl, substituted or unsubstituted aryl, and substituted or unsubstituted heterocyclic group.

The term "coordination complex", as disclosed in the present invention, consists of a coordination center and a surrounding array of ligands. The coordination center is a central atom or ion, usually a metal, in particular a transition metal. In these cases, the coordination complex is called a metal complex. Ligands are bound to the coordination center generally by a coordinate covalent bond by electron donation from a lone electron pair into an empty orbital of the metal center.

The octahedral molecular geometry referred herein, in which six ligands are symmetrically or almost symmetrically arranged around a central atom to define the vertices of an octahedron, is a particular case of metal coordination. The bonding, orbital arrangement, and other characteristics of metal coordination complexes based on the geometry of the complex, are described according to the Ligand Field Theory (LFT). Hence, the coordination polymer comprising repeating coordination complexes comprising iron (II) with an octahedral geometry, as disclosed in the present invention, refers to a coordination polymer comprising a polymeric iron (II) based system, displaying a backbone of linearly arranged iron (II) ions connected by ligands. The coordination polymer of the present invention comprises at least three coordination complexes {[Fe(NH₂Trz)₃](OTs)₂}₃.

In a particular embodiment, the at least one ligand comprising an amino moiety, preferably is (NH₂Trz) =4-amino-4H-1,2,4-triazole.

In another particular embodiment, the counter-ions comprising an aromatic moiety of the coordination polymer are (OTs) =para-toluenesulfonate.

In a particular embodiment, the preferred coordination polymer comprising repeating coordination complexes with an octahedral geometry, wherein said coordination complexes comprise iron (II) and at least one ligand comprising an amino moiety, and wherein the coordination polymer further comprises a counterion comprising an aromatic moiety is {[Fe(NH₂Trz)₃](OTs)₂}ₙ wherein n≥3, and wherein (NH₂Trz)=4-amino-4H-1,2,4-triazole, and (OTs)=para-toluenesulfonate.

In a preferred embodiment, the preferred coordination polymer is {[Fe(NH₂Trz)₃](OTs)₂}ₙ, wherein n is comprised between 3 and infinity; preferably n is comprised between 3 and 10³; alternatively n is comprised between 3 and 10⁶; even more preferably, n could also be comprised between 3 and 10⁹.

As described herein, the coordination polymer of the present invention that could be represented by the formula {[Fe(NH₂Trz)₃](OTs)₂}ₙ, wherein n ≥ 3, comprising a non-coordinated amino pendant group is free to undergo post synthetic covalent modifications.

In a particular embodiment, the coordination polymer of the present invention further comprises interstitial coordination water molecules and could be represented by the formula {[Fe(NH₂Trz)₃](OTs)₂}ₙ·xH₂O, wherein n≥3 and x is between 0 and 20, preferably, x is between 0 and 10, more preferably x is between 0 and 2.

In another particular embodiment, the coordination polymer of the present invention further comprises interstitial coordination water molecules and could be represented by the formula {[Fe(NH₂Trz)₃](OTs)₂}ₙ·xH₂O,
wherein n is between 3 and 10³ and x is between 0 and 20; alternatively n is between 3 and 10⁶ and x is between 0 and 20; alternatively n is between 3 and 10⁹ and x is between 0 and 20.

Preferably, n is between 3 and 10³ and x is between 0 and 10; alternatively n is between 3 and 10⁶ and x is between 0 and 10; alternatively n is between 3 and 10⁹ and x is between 0 and 10;

Even more preferably, n is between 3 and 10³ and x is between 0 and 2; alternatively, n is between 3 and 10⁶ and x is between 0 and 2; alternatively, n is between 3 and 10⁹ and x is between 0 and 2.

The coordination polymer of the invention, as previously described, produces a detectable spectroscopic response when reacted with formaldehyde; preferably a colorimetric response detectable by the human naked-eye. It is preferred that said colorimetric response detectable by the human naked-eye takes place at room temperature, which in the present invention is a comfortable and normal to be in temperature, which can range from 18 to 30 °C depending on the area and the latitude. However, in a scientific context it is usually between 21-25 °C (294,15-298,15 K). Generally, the room temperature value accepted in scientific work corresponds to 25 °C (298,15 K).

The expression "spectroscopic response" as described in the present invention, refers to a detectable, measurable response resulting from the absorption and/or release of energy, which is directly related to the chemical structure of the studied compound. Spectroscopy is the field that studies the interaction between matter and electromagnetic radiation, including radio waves, microwaves, infrared, visible light, ultraviolet, X-rays, and gamma rays. Visible light refers to the visible spectrum that is visible to the human eye. Daily observations of color can be related to spectroscopy; for example, the color of chemicals comes in many cases from the excitation of electrons due to an absorption of energy. In particular, when the release of energy is in the range of approximately 380 nm to 760 nm, it is visible to the human eye. In this sense, the term "colorimetric response detectable by the human naked-eye" refers to a spectroscopic response due to the absorption and/or release of energy, wherein the electromagnetic radiation released is in the human visible range of the spectrum and can be visible to the naked eye without the aid of an spectroscopic detector such as a photomultiplier, or a semiconductor radiation detector.

The World Health Organization (WHO) regulates that the safety limit of formaldehyde for humans is 80 ppb; the Occupational Safety and Health Administration also stablished the immediately dangerous limit to life of health as 20 ppm of formaldehyde. The coordination polymer of the present invention, as previously described, is directed to an immediate assessment of potential risk and danger and produces a detectable spectroscopic response ranging from as low as 1 ppb of formaldehyde; it allows to colorimetrically detect as low as 3 ppb by the human naked-eye and over 80 ppb; even over 20 ppm. The quantification can be done broadly by comparison with a concentration colored map; spectroscopic detectors are able to provide precise concentrations if necessary.

In a second aspect, the invention is directed to a composite material, wherein said composite comprises a coordination polymer, wherein the coordination polymer comprises repeating coordination complexes with an octahedral geometry, wherein said coordination complex comprises iron (II), at least one ligand comprising an amino moiety, wherein the coordination polymer further comprises counter-ions comprising an aromatic moiety; and a matrix, wherein the coordination polymer is embedded in and/or coating the matrix.

In the context of the present invention, the term "matrix" refers to any organic or inorganic fine material, preferably the matrix is an organic or inorganic solid material.

In a particular embodiment, the matrix in which the compound is embedded in, or coated by the compound, can be an organic or inorganic thermostable compound. "Thermostable matrix" refers to a substance particularly able to resist irreversible chemical or physical changes when exposed to a high relative temperature. Preferably the matrix is an organic or inorganic thermostable compound. Non-limiting examples of an organic matrix are polymers such as PMMA, polyester, polystyrene, polyurethane or phenolic resins, or paper; non-limiting examples of an inorganic matrix are calcium carbonate, calcium sulfate, plaster, aluminosilicates, clay, zeolites, silica, or glass, among others. More preferably, the matrix is a thermostable polymer which remains stable at temperatures over 100 °C, even more preferable the matrix is stable over 150 °C. Most preferably, the matrix is stable at temperatures over 200 °C. Even more preferably, the matrix is poly(methylene methacrylate) (PMMA).

In a particular embodiment, the at least one ligand comprising an amino moiety is 4-amino-4H-1,2,4-triazol (NH₂Trz).

In a preferred embodiment, the coordination polymer comprising repeating coordination complexes comprised in the composite is {[Fe(NH₂Trz)₃](OTs)₂}ₙ with n≥3, preferably n is between 3 and 10³, or n is between 3 and 10⁶, alternatively n is between 3 and 10⁹; more particularly the compound is {[Fe(NH₂Trz)₃](OTs)₂}ₙ-xH₂O, wherein n≥3, preferably n is between 3 and 10³, or n is between 3 and 10⁶, alternatively n is between 3 and 10⁹, and x refers to the number of residual interstitial water molecules, which is selected from a value between 0 and 20. The most preferable composite of the present invention comprises the coordination polymer {[Fe(NH₂Trz)₃](OTs)₂}ₙ·xH₂O, wherein n≥3, preferably n is between 3 and 10³, or n is between 3 and 10⁶, alternatively n is between 3 and 10⁹, and x is between 0 and 20, and a thermostable polymeric matrix, in particular poly(methyl metacrylate) (PMMA), wherein the coordination polymer is embedded in the matrix or coating it. The composite can further comprise other components; non-limiting examples are dyes or preservatives.

In a third aspect, the present invention is directed to the use of the composite as defined above for the identification and/or quantification of formaldehyde.

More preferably the identification and/or quantification is performed by a detectable spectroscopic response, such as infrared (IR) or nuclear magnetic resonance spectroscopy. Even more preferably, the detectable spectroscopic response is a colorimetric change, wherein the electromagnetic radiation released is in the human visible range of the spectrum and can be visible to the naked eye.

In a fourth aspect, the invention is directed to a hand-held portable device comprising the composite as defined above and a suitable case. Hand-held portable devices are designed to be held and used in the hands, are light and small enough to be easily carried around and stored. Non-limiting examples of hand-held portable devices are a colorimetric test strip, a colorimetric test kit, a colorimetric tube, a film comprising a colorimetric reagent, a small piece of a stiff material comprising a colorimetric reagent in a removable case or confined in a container comprising a porous component, e.g. a membrane, that can be exposed to the environment after removal of a protective item.

A fifth aspect is directed to the use of the composite of the present invention for the identification and/or quantification of formaldehyde by a detectable spectroscopic response. In a preferred embodiment, the identification and/or quantification of formaldehyde is performed visually by a colorimetric change detectable by the human naked-eye from a concentration of about 3 ppb to 20 ppm of formaldehyde and higher.

In a sixth aspect, the present invention is directed to a method for the colorimetric identification and/or quantification of formaldehyde, said method comprising the following steps: i) contacting either the coordination polymer or the composite of the present invention, as defined above, and a sample; ii) detecting the color displayed by the composite after being in contact with the sample of step (i); iii) comparing the color obtained with a concentration colored map and the intensity of said color. In a particular embodiment, the coordination polymer embedded in or coating the matrix is contacted with a gaseous, liquid or solid sample or analyte to produce a non-reversible reaction. Preferably, the color obtained is compared with a concentration colored map generated by converting the reflectance spectra of several composites which have been contacted with well-defined, known concentrations of formaldehyde, into RGB values and subtracting the control image.

In a seventh aspect, the invention is directed to a process for preparing the composite as defined above, comprising the following steps:
i) providing a matrix; preferably a polymeric matrix;
ii) providing the coordination polymer as defined above;
iii) combining the matrix (i) and the coordination polymer (ii); preferably by mixing them or by coating the matrix with the compound.

The embodiments described herein are representative only and are not intended to be limiting. Variations, combinations and modifications are possible and are within the scope of the disclosure. Accordingly, the scope of protection is not limited by the description set out above, but is defined by the claims which follow that scope including all equivalents of the subject matter of the claims.

### Examples

### Synthesis of coordination polymer 1:

Coordination polymer (CP) of formula {[Fe(NH₂Trz)₃](OTs)₂}ₙ·xH₂O (Compound 1), in which the non-coordinated amino substituents in (NH₂Trz) are free to undergo post synthetic covalent modifications, thereby generating a new CP displaying different chemical functionalities which ultimately leads to diverse physical and chemical properties, was synthetized in two steps at room temperature.

Firstly, 0.20 mmol of Fe(OTs)₂ (OTs = tosylate) were dissolved in 3 mL of distilled water. After that, the Fe(OTs)₂ aqueous solution was added dropwise to a solution of containing 0.59 mmol of aminotriazole dissolved in 3 mL of ethanol. The H₂O:EtOH solution of Fe(OTs)₂ / aminotriazole was stirred for 5 minutes, filtered and left in the freezer overnight. **1** was obtained as a pink powder in 60% yield.

### Synthesis of coordination polymer 2:

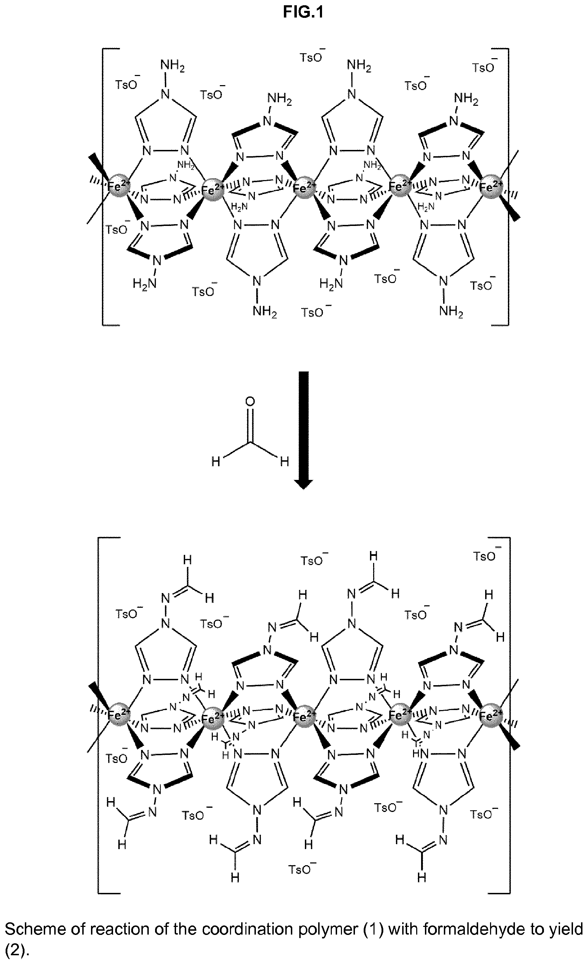

When contacted with formaldehyde vapors, a covalent post synthetic modification (C-PSM), in the form of a nucleophilic addition, takes place leading to the formation of the corresponding imine derivative (Compound **2**) and water, as shown in the scheme depicted in Figure 1.

Compound **2** was synthetized by following the ensuing general procedure. A screw vial for chromatography (diameter 12 mm, height 32 mm) containing 20 mg of **1** was placed in a clear glass simple vial (diameter 27 mm, height 55 mm) provided with 0,2 ml of formaldehyde. The glass simple vial was sealed and kept at room temperature overnight to allow the gas-solid reaction between the corresponding volatile organic compound and **1.**

Figure 1 shows the scheme of the reaction between (1) and formaldehyde to yield (2). The structure of the coordination polymer (**1**) before exposed to formaldehyde is depicted in the top image, while that of the imine derivative (2) after being exposed to formaldehyde is represented in the bottom image.

This C-PSM was confirmed by proton nuclear magnetic resonance (¹H NMR) on (**2**) after digestion of a sample in a deuterated aqueous solution of K₃PO₄ followed by a D₂O/CDCl₃ extraction.

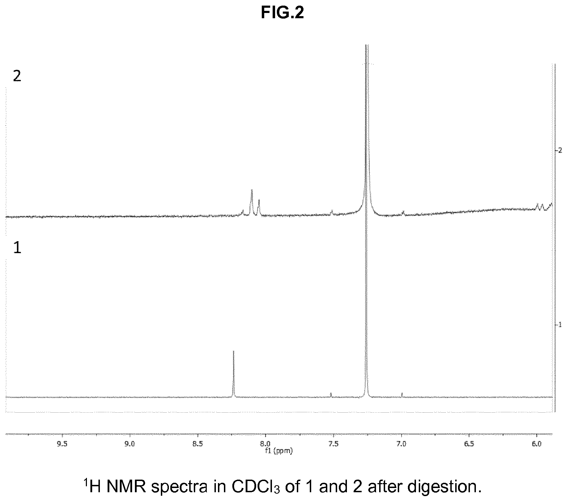

The NMR spectrum for the compound containing an imine moiety displayed the characteristic signal corresponding to a primary imine, a singlet at δ = 8.05 ppm integrated by the two protons corresponding to -N=CH₂, and the corresponding signals from the methylene groups of the triazole rings (δ = 8.10 ppm). The gas-solid phase C-PSM is complete (the ¹H signal associated to the amino group in NH₂Trz in **1** are absent in the NMR spectra of compound **2,** as shown in Figure 2).

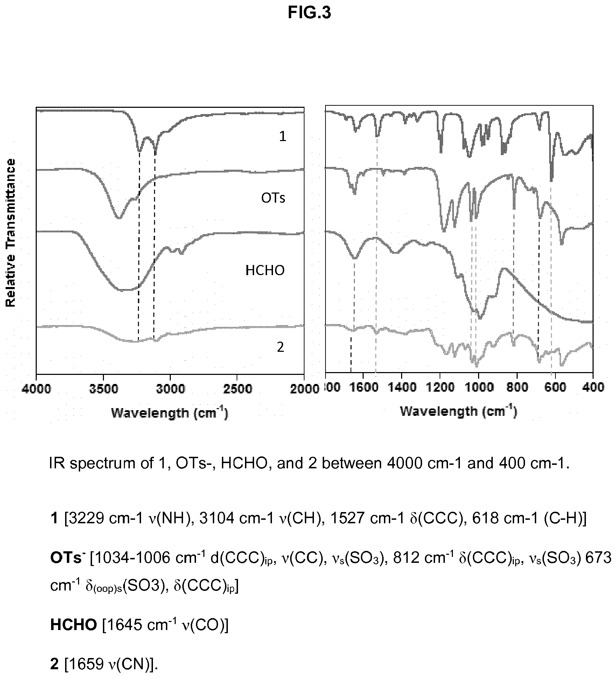

Identification of the functional group imine in (**2**), replacing the NH₂ pendant groups of compound (**1**) was also performed by infra-red (IR) spectroscopy. The absorption band corresponding to the C-N stretching mode in the N=CH₂ moiety appears at 1659 cm⁻¹, while the NH stretching mode centered at 3167 cm⁻¹ is absent. Remarkably, the C=O stretching band from formaldehyde at 1645 cm⁻¹ is absent in compound 2. The IR spectrum of 1 and 2 is represented in Figure 3. Compound 1 is represented on the top of the spectrum, while compound 2 is represented at the bottom. The second from the top corresponds to tosylate, while the second from the bottom corresponds to formaldehyde.

**2** displays different physical and chemical properties compared to **1.** The latter is a SCO compound whereas the iron centers in **2** remain in the HS state irrespective of temperature. The SCO phenomena in **1** can be easily seen by nacked eyes in the form of a reversible color change from lilac to white when heating (LS→HS) and back to lilac when cooling (HS→LS). Interestingly, when **1** is exposed to formaldehyde, the color changes from lilac to white even at room temperature, as a result of the LS→HS spin transition that takes place.

### Preparation of the composite material 1-PMMA:

1-PMMA films can be prepared by dissolving 1 g of PMMA in 10 mL of CHCl₃ in a first step. Afterwards, it was sonicated for 10 minutes and 1g of compound 1 was added. The mixtures has to be further sonicated for over 20 minutes, and then poured in a 5x5 cm Teflon mold. After setting for a few hours, a **1-PMMA** film of approximately 2 mm of thickness was easily removed from the Teflon mold.

**1-PMMA** films are stable up to 220 °C (weight loss corresponds to released water molecules) and show the expected SCO phenomena. Noteworthy, preliminary results confirm that **1-PMMA** films react with formaldehyde vapors in the same way as powdered compound **1** does, giving the same optical response in the presence of formaldehyde, thus making **1-PMMA** films a very promising easy-to-use formaldehyde sensor.

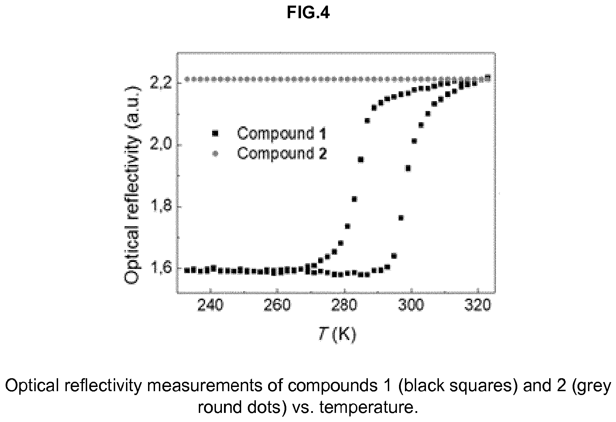

The optical reflectivity of complexes 1 and 2 was measured between 233 K and 333 K. Figure 4 depicts, on the one hand, an abrupt spin transition for compound 1, with a hysteresis of 12 K. The transition takes place between 267 K and 317 K, with transition temperatures T1/2↓, = 285 K and T1/2↑ = 297 K. On the other hand, compound 2 remains in the HS state for the whole range of temperatures.

### Optical reflectivity measurements of compound 1 after being exposure to VOC's.

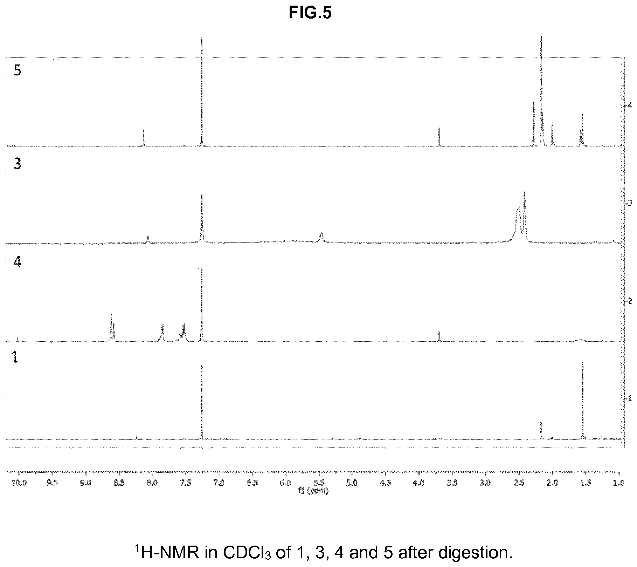

To further investigate the potential of the compound of the invention as a sensor material, compound 1 was exposed to other volatile organic compounds, such as formic acid, benzaldehyde and acetone. C-PSM reactions were confirmed by IR and ¹H-NMR spectroscopic techniques. Figure 5 compares ¹H-NMR spectra of compounds 1, 3, 4 and 5.
**1** corresponding to compound 1, {[Fe(NH₂Trz)₃](OTs)₂}ₙ.
**3** corresponds to compound **1** after being exposed to formic acid vapors.
**4** corresponds to compound **1** after being exposed to benzaldehyde vapors.
**5** corresponds to compound **1** after being exposed to acetone vapors.

The normalized reflectivity vs. temperature was also measured for benzaldehyde, acetone and acetic acid, as well as ammonia and hydrochloric acid. The following table summarizes the values obtained at room temperature (approximately 298 K) and the displayed color of compound 1 after being exposed to vapors of each of the studied compounds.

**Table 1. Optical reflectivity values of compounds 1-7 at 298K and corresponding colorimetric responses.**

| **Compound** | **Optical reflectivity (UV-vis absorption) T=298 K** | **Displayed color at T=298K** |
|---|---|---|
| blank | -520 nm | Lilac |
| **formaldehyde** | - | White |
| **acetaldehyde** | ∼520 nm | Lilac |
| **butyraldehyde** | ∼520 nm | Lilac |
| **benzaldehyde** | ∼520 nm | Lilac |
| acetone | ∼520 nm | Lilac |
| acetic acid | ∼520 nm | Lilac |
| ammonia | ∼520 nm | Brown |
| hydrochloric acid | ∼520 nm | Yellow |

The comparative tests between the four volatile aldehydes ran in this table show the remarkable high selectivity of the coordination polymer of the present invention, being formaldehyde the only analyte detected by a proper colorimetric response.

## Claims

1. Use of a coordination polymer, wherein the coordination polymer comprises repeating coordination complexes with an octahedral geometry, wherein said coordination complex comprises:
- iron(II);
- at least one ligand comprising an amino moiety;
wherein the coordination polymer further comprises counter-ions comprising an aromatic moiety;
for the identification and/or quantification of formaldehyde.

2. The use of the coordination polymer according to claim 1, wherein the at least one ligand comprising an amino moiety is (NH₂Trz).

3. The use of the coordination polymer according to claim 1, wherein the counter-ions comprising an aromatic moiety are tosylate counter-ions.

4. The use of the coordination polymer according to any of claims 1 and 2, wherein the coordination polymer is {[Fe(NH₂Trz)₃](OTs)₂}ₙ·xH₂O, wherein n≥3, x is between 0 and 20, wherein (NH₂Trz)=4-amino-4H-1,2,4-triazole, and (OTs)=para-toluenesulfonate.

5. The use of the coordination polymer according to any of claims 1 to 3, wherein the identification and/or quantification of formaldehyde is performed by a detectable spectroscopic response, such as a colorimetric response that can be detected by the human naked-eye.

6. A composite material comprising:
(i) a coordination polymer, wherein the coordination polymer comprises repeating coordination complexes with an octahedral geometry, wherein said coordination complex comprises:
- iron(II);
- at least one ligand comprising an amino moiety; wherein the at least one ligand comprising an amino moiety is (NH₂Trz),
wherein the coordination polymer further comprises counter-ions comprising an aromatic moiety;
(ii) a matrix;
wherein the coordination polymer of (i) is embedded in and/or coating the matrix of (ii).

7. The composite according to claim 6, wherein the matrix is a thermostable compound.

8. The composite according to any of claims 6 to 7, wherein the coordination polymer is {[Fe(NH₂Trz)₃](OTs)₂}ₙ·xH₂O, wherein n≥3, x is between 0 and 20, and wherein (NH₂Trz)=4-amino-4H-1,2,4-triazole, and (OTs)=para-toluenesulfonate.

9. The use of
(i) a coordination polymer as defined in claim 1,
wherein the coordination polymer of (i) is embedded in and/or coated onto the matrix of (ii) as defined in claims 6 or 7,
for the identification and/or quantification of formaldehyde, by a detectable spectroscopic response such as a colorimetric response that can be detected by the human naked-eye.

10. A hand-held portable device for the identification and/or quantification of formaldehyde comprising the composite according to any of claims 6 to 8 and a suitable case.

11. Use of a hand-held portable device according to claim 10 for the identification and/or quantification of formaldehyde by a detectable spectroscopic response such as a colorimetric response that can be detected by the human naked-eye.

12. A method for the identification and/or quantification of formaldehyde, wherein the method comprises contacting either the composite as defined in any of claims 6 to 9, or the hand-held device as defined in claim 10, with a gaseous, liquid or solid analyte to produce a non-reversible reaction, wherein said reaction produces a detectable spectroscopic response, such as a colorimetric response, that can be detected by the human naked-eye.

13. The method according to claim 12, wherein the color obtained is compared with a concentration colored map generated by converting the reflectance spectra of several composites as defined any of claims 6 to 9, wherein said composites have been contacted with well-defined, known concentrations of formaldehyde, into RGB values and subtracting the control image.

14. Process for preparing the composite as defined in any of claims 6 to 8, comprising the following steps:
(i) providing a matrix; preferably a polymeric matrix;
(ii) providing the coordination polymer as defined in any of claims 2 to 4;
(iii) combining the matrix (i) and the coordination polymer (ii); preferably by mixing them or by coating the matrix with the coordination polymer.

## Patentansprüche

1. Verwendung eines Koordinationspolymers, wobei das Koordinationspolymer wiederkehrende Koordinationskomplexe mit einer oktaedrischen Geometrie umfasst, wobei der Koordinationskomplex umfasst:
- Eisen(II);
- mindestens einen Liganden, der eine Aminoeinheit umfasst;
wobei das Koordinationspolymer weiter Gegenionen, umfassend eine aromatische Einheit, umfasst;
zur Identifizierung und/oder Quantifizierung von Formaldehyd.

2. Verwendung des Koordinationspolymers nach Anspruch 1, wobei der mindestens eine Ligand, der eine Aminoeinheit umfasst, (NH₂Trz) ist.

3. Verwendung des Koordinationspolymers nach Anspruch 1, wobei die Gegenionen, umfassend eine aromatische Einheit, Tosylat-Gegenionen sind.

4. Verwendung des Koordinationspolymers nach einem der Ansprüche 1 und 2, wobei das Koordinationspolymer {[Fe(NH₂Trz)₃](OTs)₂}ₙ·xH₂O ist, wobei n≥3, x zwischen 0 und 20 liegt, wobei (NH₂Trz)=4-Amino-4H-1,2,4-triazol und (OTs)=para-Toluolsulfonat.

5. Verwendung des Koordinationspolymers nach einem der Ansprüche 1 bis 3, wobei die Identifizierung und/oder Quantifizierung von Formaldehyd durch eine nachweisbare spektroskopische Reaktion erfolgt, beispielsweise eine kolorimetrische Reaktion, die mit bloßem Auge des Menschen erfasst werden kann.

6. Kompositmaterial, umfassend:
(i) ein Koordinationspolymer, wobei das Koordinationspolymer wiederkehrende Koordinationskomplexe mit einer oktaedrischen Geometrie umfasst, wobei der Koordinationskomplex umfasst:
- Eisen(II);
- mindestens einen Liganden, der eine Aminoeinheit umfasst; wobei der mindestens eine Ligand, der einen Aminoeinheit umfasst, (NH₂Trz) ist, wobei das Koordinationspolymer weiter Gegenionen, umfassend eine aromatische Einheit, umfasst;
(ii) eine Matrix;
wobei das Koordinationspolymer von (i) eingebettet ist in und/oder die Matrix von (ii) beschichtet.

7. Komposit nach Anspruch 6, wobei die Matrix eine thermostabile Verbindung ist.

8. Komposit nach einem der Ansprüche 6 bis 7, wobei das Koordinationspolymer {[Fe(NH₂Trz)₃](OTs)₂}ₙ·xH₂O ist, wobei n≥3, x zwischen 0 und 20 liegt, wobei (NH₂Trz)=4-Amino-4H-1,2,4-triazol und (OTs)=para-Toluolsulfonat.

9. Verwendung von
(i) einem Koordinationspolymer, wie in Anspruch 1 definiert,
wobei das Koordinationspolymer von (i) eingebettet ist in und/oder auf der Matrix von (ii) beschichtet ist, wie in den Ansprüchen 6 oder 7 definiert,
zur Identifizierung und/oder Quantifizierung von Formaldehyd durch eine nachweisbare spektroskopische Reaktion, beispielsweise eine kolorimetrische Reaktion, die mit bloßem Auge des Menschen erfasst werden kann.

10. Tragbares Handgerät zur Identifizierung und/oder Quantifizierung von Formaldehyd, umfassend den Komposit nach einem der Ansprüche 6 bis 8 und eine geeignete Hülle.

11. Verwendung eines tragbaren Handgeräts nach Anspruch 10 zur Identifizierung und/oder Quantifizierung von Formaldehyd durch eine nachweisbare spektroskopische Reaktion, beispielsweise eine kolorimetrische Reaktion, die mit bloßem Auge des Menschen erfasst werden kann.

12. Verfahren zur Identifizierung und/oder Quantifizierung von Formaldehyd, wobei das Verfahren das Kontaktieren entweder des Komposits gemäß einem der Ansprüche 6 bis 9 oder des Handgeräts gemäß Anspruch 10 mit einem gasförmigen, flüssigen oder festen Analyten umfasst, um eine nicht reversible Reaktion hervorzurufen, wobei die Reaktion eine nachweisbare spektroskopische Reaktion erzeugt, beispielsweise eine kolorimetrische Reaktion, die mit dem bloßen Auge des Menschen erfasst werden kann.

13. Verfahren nach Anspruch 12, wobei die erhaltene Farbe mit einer Konzentrationsfarbkarte verglichen wird, erzeugt durch Umwandeln der Reflexionsspektren mehrerer Komposite, wie in einem der Ansprüche 6 bis 9 definiert, wobei die Komposite mit genau definierten, bekannten Konzentrationen von Formaldehyd in Kontakt gebracht wurden, in RGB-Werte und Subtrahieren des Kontrollbilds.

14. Verfahren zur Herstellung des Komposits nach einem der Ansprüche 6 bis 8, umfassend die folgenden Schritte:
(i) Bereitstellen einer Matrix; vorzugsweise eine Polymermatrix;
(ii) Bereitstellen des Koordinationspolymers, wie in einem der Ansprüche 2 bis 4 definiert;
(iii) Kombinieren der Matrix (i) und des Koordinationspolymers (ii); vorzugsweise durch Mischen oder durch Beschichten der Matrix mit dem Koordinationspolymer.

## Revendications

1. Utilisation d'un polymère de coordination, le polymère de coordination comprenant des complexes de coordination répétitifs à géométrie octaédrique, ledit complexe de coordination comprenant :
- du fer(II) ;
- au moins un ligand comprenant un fragment amino ;
le polymère de coordination comprenant en outre des contre-ions comprenant un fragment aromatique ;
pour l'identification et/ou la quantification du formaldéhyde.

2. Utilisation du polymère de coordination selon la revendication 1, dans laquelle ledit au moins un ligand comprend un fragment amino est (NH₂Trz).

3. Utilisation du polymère de coordination selon la revendication 1, dans laquelle les contre-ions comprenant un fragment aromatique sont des contre-ions tosylate.

4. Utilisation du polymère de coordination selon l'une quelconque des revendications 1 et 2, dans laquelle le polymère de coordination est {[Fe(NH₂Trz)₃](OTs)₂}ₙ·xH₂O, n≥3, x est compris entre 0 et 20, (NH₂Trz)=4-amino-4H-1,2,4-triazole et (OTs)=para-toluènesulfonate.

5. Utilisation du polymère de coordination selon l'une quelconque des revendications 1 à 3, dans laquelle l'identification et/ou la quantification du formaldéhyde est réalisée par une réponse spectroscopique détectable, telle qu'une réponse colorimétrique qui peut être détectée à l'oeil nu humain.

6. Matériau composite comprenant :
(i) un polymère de coordination, le polymère de coordination comprenant des complexes de coordination répétitifs avec une géométrie octaédrique, ledit complexe de coordination comprenant :
- du fer(II) ;
- au moins un ligand comprenant un fragment amino ; ledit au moins un ligand comprenant un fragment amino est (NH₂Trz),
le polymère de coordination comprenant en outre des contre-ions comprenant un fragment aromatique ;
(ii) une matrice ;
le polymère de coordination de (i) étant noyé dans et/ou recouvrant la matrice de (ii).

7. Composite selon la revendication 6, dans lequel la matrice est un composé thermostable.

8. Composite selon l'une quelconque des revendications 6 à 7, dans lequel le polymère de coordination est {[Fe(NH₂Trz)₃](OTs)₂}ₙ·xH₂O, n≥3, x est compris entre 0 et 20, et (NH₂Trz)=4-amino-4H-1,2,4-triazole, et (OTs)=para-toluènesulfonate.

9. Utilisation de
(i) un polymère de coordination tel que défini dans la revendication 1,
le polymère de coordination de (i) étant noyé dans et/ou enduit sur la matrice de (ii) telle que définie dans les revendications 6 ou 7,
pour l'identification et/ou la quantification du formaldéhyde, par une réponse spectroscopique détectable telle qu'une réponse colorimétrique qui peut être détectée à l'oeil nu humain.

10. Dispositif portable apte à être tenu à la main pour l'identification et/ou la quantification du formaldéhyde comprenant le composite selon l'une quelconque des revendications 6 à 8 et un étui approprié.

11. Utilisation d'un dispositif portable apte à être tenu à la main selon la revendication 10 pour l'identification et/ou la quantification du formaldéhyde par une réponse spectroscopique détectable telle qu'une réponse colorimétrique qui peut être détectée à l'oeil nu humain.

12. Procédé pour l'identification et/ou la quantification du formaldéhyde, le procédé comprenant la mise en contact soit du composite tel que défini dans l'une quelconque des revendications 6 à 9, soit du dispositif apte à être tenu à la main tel que défini dans la revendication 10, avec un agent gazeux, liquide ou analyte solide pour produire une réaction non réversible, ladite réaction produisant une réponse spectroscopique détectable, telle qu'une réponse colorimétrique, qui peut être détectée à l'oeil nu humain.

13. Procédé selon la revendication 12, dans lequel la couleur obtenue est comparée à une carte colorée de concentration générée en convertissant en des valeurs RVB les spectres de réflectance de plusieurs composites tels que définis dans l'une quelconque des revendications 6 à 9, lesdits composites ayant été mis en contact avec des concentrations connues et bien définies de formaldéhyde, et en soustrayant l'image de contrôle.

14. Procédé de préparation du composite tel que défini dans l'une quelconque des revendications 6 à 8, comprenant les étapes suivantes :
(i) fournir une matrice ; de préférence une matrice polymère ;
(ii) fournir le polymère de coordination tel que défini dans l'une quelconque des revendications 2 à 4 ;
(iii) combiner la matrice (i) et le polymère de coordination (ii) ; de préférence en les mélangeant ou en enduisant la matrice avec le polymère de coordination.
